# EUROPÄISCHE PATENTANMELDUNG

(11) **EP 3 569 442 A1**
(43) Veröffentlichungstag der Anmeldung: **20.11.2019**
(21) Anmeldenummer: 19174091.9
(22) Anmeldetag: 13.05.2019
(51) Int. Cl.: B60L 53/36, B60L 53/37

(54) **IDENTIFIKATION EINES FAHRZEUGS UND/ODER ERMITTLUNG EINER RELATIVEN POSITION DES FAHRZEUGS GEGENÜBER EINER LADESTATION**

(30) Priorität: 17.05.2018 DE 102018207750
(71) Anmelder: Siemens Mobility GmbH, 81739 München (DE)
(72) Erfinder: Bühs, Florian, 10777 Berlin (DE); Rompe, Andre, 12621 Berlin Kaulsdorf (DE); Voss, Frank, 12623 Berlin (DE)

(57) **Zusammenfassung**

Offenbart ist ein System zur Identifikation und/oder zur Positionsbestimmung von mindestens einem Fahrzeug relativ zu mindestens einer Ladestation, wobei die Ladestation zum elektrischen Aufladen des Fahrzeuges mit dem Fahrzeug koppelbar ist, wobei das System mindestens einen optischen Sensor aufweist, wobei der Sensor ausgebildet ist, um eine für ein menschliches Auge unsichtbare Kennung zu erfassen. Des Weiteren sind eine Steuereinheit, ein Fahrzeug und ein Verfahren offenbart.

## Beschreibung

Die Erfindung betrifft ein System zur Identifikation und zur Positionsbestimmung von mindestens einem Fahrzeug relativ zu mindestens einer Ladestation. Des Weiteren betrifft die Erfindung ein Verfahren zur Identifikation eines Fahrzeugs und zum Ermitteln einer relativen Position des Fahrzeugs gegenüber einer Ladestation sowie ein Fahrzeug und eine Steuereinheit.

In verschiedenen automobilen Bereichen werden zunehmend mehr Fahrzeuge teilweise oder vollständig elektrisch betrieben. Insbesondere im öffentlichen Personennahverkehr können je nach Ausgestaltung der Antriebsbatterien häufige Ladevorgänge während einer täglichen Einsatzzeit notwendig sein. Hierzu können beispielsweise für elektrisch angetriebene Busse Ladestationen bereitgestellt werden. Die Ladestationen können an definierten Haltestellen installiert sein und Lademasten oder Ladesäulen aufweisen.

Ein Fahrer kann das elektrische Fahrzeug zum Durchführen eines Ladevorgangs der Antriebsbatterie unterhalb oder neben der Ladestation abstellen, sodass eine elektrisch leitfähige Verbindung zwischen dem Fahrzeug und der Ladestation hergestellt wird. Es sind dabei Verfahren bekannt, bei welchen Pantograph Kontakte von einem Lademast der Ladestation auf Gegenkontakte des Fahrzeugs abgesenkt oder aus der Ladestation hinausgefahren werden. Die Gegenkontakte können dabei, insbesondere bei elektrisch angetriebenen Bussen, auf einem Fahrzeugdach angeordnet sein.

Für einen derartigen Vorgang ist es erforderlich das zuladende Fahrzeug bereits vor dem Parken zu identifizieren und anschließend zu verifizieren, dass das Fahrzeug innerhalb eines Toleranzbereichs für den Ladevorgang abgestellt ist.

Bisher wurde eine WLAN-Richtfunkstrecke zwischen Ladestationen und elektrisch angetriebenen Bussen in Kombination mit einem Abstandssensor eingesetzt, um eine derartige Ausrichtung des Fahrzeugs gegenüber der Ladestation zu ermöglichen. Eine derartige Lösung zum Ausrichten des Busses bzw. eines Fahrzeugs gegenüber einer Ladestation ist jedoch technisch aufwändig und weist einen hohen Montageaufwand auf.

Aufgabe der Erfindung ist es insbesondere ein System und ein Verfahren vorzuschlagen, welche eine technisch einfache und robuste Identifizierung und Positionierung eines Fahrzeugs gegenüber einer Ladesäule ermöglichen.

Gelöst wird die Aufgabe durch den Gegenstand des unabhängigen Patentanspruchs 1, 7, 11 und des unabhängigen Patentanspruchs 16. Vorteilhafte Ausgestaltungen der Erfindung sind Gegenstand von jeweils abhängigen Unteransprüchen.

Nach einem Aspekt der Erfindung wird ein System zur Identifikation und/oder zur Positionsbestimmung von mindestens einem Fahrzeug relativ zu mindestens einer Ladestation bereitgestellt. Erfindungsgemäß ist die Ladestation zum elektrischen Aufladen des Fahrzeuges mit dem Fahrzeug koppelbar, wobei das System mindestens einen optischen Sensor aufweist, wobei der optische Sensor dazu ausgebildet ist, um eine für menschliches Auge unsichtbare Kennung zu erfassen.

Bevorzugterweise kann das System mindestens einen optischen Sensor aufweisen, welcher als eine Kamera oder eine Videokamera ausgestaltet ist. Der mindestens eine optische Sensor kann vorzugsweise im infraroten oder ultravioletten Wellenlängenbereich empfindlich sein. Zusätzlich kann der optische Sensor auch im sichtbaren Wellenlängenbereich empfindlich sein.

Abhängig von Lichtverhältnissen einer Fahrzeugumgebung bzw. einer Umgebung der Ladestation kann eine zusätzliche Strahlenquelle eingesetzt werden. Die mindestens eine optische Kennung kann Strahlen einer Wellenlänge reflektieren oder abstrahlen, welche von dem mindestens einen optischen Sensor detektierbar sind.

Das mindestens eine Fahrzeug kann beispielsweise ein elektrisch angetriebenes Fahrzeug sein, welches manuell, autonom oder teilautonom betreibbar ist. Das Fahrzeug kann beispielsweise ein eBus, ein Transporter, ein landwirtschaftliches Fahrzeug und dergleichen sein.

Die mindestens eine optische Kennung kann beispielsweise als eine Folie, ein Aufkleber, eine Lackierung und dergleichen ausgestaltet sein, welche Strahlen, beispielsweise im UV oder IR Wellenlängenbereich, in Richtung des mindestens einen optischen Sensors abstrahlen können.

Basierend auf einem Muster und/oder einer geometrischen Formgebung der mindestens einen optischen Kennung können von einer Steuereinheit der Ladestation Informationen aus der mindestens einen optischen Kennung hergeleitet werden.

Der mindestens eine optische Sensor kann an der Ladestation angeordnet sein und Bilder vom heranfahrenden Fahrzeug aufzeichnen. Vorzugsweise kann der mindestens eine optische Sensor die Bilder des Fahrzeugs erstellen, während das Fahrzeug auf die Ladestation zufährt bzw. im Vorfeld des Ladevorgangs. Um einen ausreichenden Öffnungswinkel zu ermöglichen, können auch mehrere optische Sensoren oder Kameras verwenden werden. Auf jedem Fahrzeug ist mindestens eine optische Kennung angebracht, die beispielsweise eine eindeutige Identifikationsnummer enthalten können.

Da Art und Position der optischen Kennung je Fahrzeug kann ist bekannt und lässt sich über die Identifikationsnummer des jeweiligen Fahrzeugs ermitteln und zuordnen. Über optische Messverfahren, wie beispielsweise Triangulation kann somit auch eine genaue Position des Fahrzeugs im Bereich der Ladestation bestimmen. Hierdurch kann das Fahrzeug optimal und entsprechend seinen Gegenkontakten relativ zu der Ladestation ausrichten.

Durch das System lassen sich Fahrzeuge bereits vor Erreichen der Parkposition identifizieren, sodass Vorbereitungen für den eigentlichen Ladevorgang eingeleitet werden kann, sobald das Fahrzeug erkannt wurde. Auf diese Weise lässt sich die Ladedauer insgesamt verkürzen.

Darüber hinaus ist es möglich mit der gleichen bzw. bereits eingesetzten Hardware die Parkposition des Fahrzeugs zu vermessen, um sicherzustellen, dass das jeweilige Fahrzeug innerhalb der erlaubten Toleranzen geparkt wurde.

Dadurch, dass die mindestens eine optische Kennung unsichtbar für menschliches Auge ist, können nur Strahlen außerhalb des sichtbaren Spektrums durch die optische Kennung reflektiert werden. Hierdurch kann beispielsweise eine auf Bussen angebrachte großflächige Werbung uneingeschränkt eingesetzt werden, ohne, dass die funktionalen Kennungen ein Gesamtbild des Fahrzeugs stören. Vorzugsweise ist die optische Kennung hierfür im sichtbaren Wellenlängenbereich transparent ausgestaltet.

Gemäß einem Ausführungsbeispiel des Systems sind in der mindestens einen optischen Kennung Fahrzeugdaten, eine Identifikationsnummer, eine Ladeberechtigung und/oder eine optimale Parkposition relativ zur Ladestation zum Durchführen eines Ladevorgangs hinterlegt. Aufgrund einer Vielzahl an Gestaltungsmöglichkeiten der mindestens einen optischen Kennung können unterschiedliche Informationen in jeder optischen Kennung hinterlegt sein. Bei mehreren optischen Kennungen pro Fahrzeug können die optischen Kennungen gleiche Informationen oder unterschiedliche Informationen aufweisen.

Bevorzugterweise ist die Position der jeweiligen optischen Kennungen der Steuereinheit an oder auf dem Fahrzeug der Ladestation bekannt, sodass eine Ausrichtung des Fahrzeugs anhand einer Positionsermittlung der optischen Kennung allein realisierbar ist.

Nach einem weiteren Ausführungsbeispiel des Systems sind Daten zugeordnet zur Kennungen von Fahrzeugen auf einer Datenbank des Systems oder auf einer externen Servereinheit hinterlegt. Es können somit das Fahrzeug und die Ladestation lokale bzw. interne Steuereinheiten aufweisen, welche integrierte Datenbanken beinhalten. Alternativ oder zusätzlich kann die Ladestation mit Hilfe der Steuereinheit eine Kommunikationsverbindung zu einer externen Servereinheit herstellen, um auf extern bereitgestellte Informationen bezüglich der Fahrzeuge zurückgreifen zu können. Die externe Servereinheit kann beispielsweise eine Cloud sein. Die bereitgestellten Informationen können insbesondere Verknüpfungen bzw. Zuordnungen zwischen den Fahrzeugdaten und den durch den mindestens einen Sensor auslesbaren Kennungen sein.

Gemäß einem weiteren Ausführungsbeispiel des Systems ist eine Steuereinheit vorgesehen, wobei die Steuereinheit dazu ausgebildet ist, um nach der Identifikation der optischen Kennung des mindestens einen Fahrzeugs Daten zum identifizierten Fahrzeug von einer Datenbank oder einer externen Servereinheit abzurufen. Hierdurch können die in der mindestens einen optischen Kennung hinterlegten Informationen auf ein Mindestmaß beschränkt sein. Beispielsweise kann eine in der optischen Kennung hinterlegte Identifikationsnummer des Fahrzeugs bereits ausreichen, um anhand einer externen oder internen Datenbank weitere Informationen über das Fahrzeug abrufen zu können. Die interne Datenbank kann vorzugsweise in der Steuereinheit integriert sein und beispielsweise in Form eines statischen oder dynamischen Speichers ausgestaltet sein. Insbesondere können derartige Informationen eine relative Position von Ladekontakten gegenüber der optischen Kennung aufweisen. Des Weiteren können Fahrzeugmaße ebenfalls bei einer Positionierung des Fahrzeugs gegenüber der Ladestation verwendet werden.

Nach einem weiteren Ausführungsbeispiel des Systems ist eine Lichtquelle zum Ausleuchten der mindestens einen optischen Kennung vorgesehen. Zum Hervorrufen von Reflektionen an den jeweiligen optischen Kennungen können beispielsweise IR oder UV Lampen bzw. Blitze verwendet werden, welche der mindestens eine optische Sensor bei Bedarf aktivieren kann. Insbesondere können die zusätzlichen Lichtquellen bei wenig Umgebungslicht oder bei Nacht eingesetzt werden, um eine uneingeschränkte Funktionstüchtigkeit des Systems zu gewährleisten.

Gemäß einem weiteren Ausführungsbeispiel des Systems ist der mindestens eine optische Sensor ausgebildet, um die optische Kennung in Form eines QR-Codes, eines Bar-Codes, eines Zahlencodes und/oder in Form einer geometrischen Form zu erkennen.

Somit können bekannte Techniken wie beispielsweise Bar-Code oder QR-Code zum Bereitstellen von Informationen verwendet werden. Insbesondere QR-Codes lassen sich effizient für Triangulation einsetzen, um eine Position des Fahrzeugs anhand einer Positionserkennung der optischen Kennung durchzuführen.

Des Weiteren können auch beliebige 1-dimensionale, 2-dimensionale oder auch 3-dimensionale Anordnungen und/oder Geometrien als optische Kennungen verwenden. Dabei ist vorteilhaft, wenn die optische Kennung im sichtbaren Wellenlängenbereich transparent ist, sodass sich insbesondere auch Fenster von Fahrzeugen damit überkleben lassen ohne die Insassen oder den Fahrer in ihrer Sicht einzuschränken. Die Ausgestaltung der optischen Kennung ist grundsätzlich frei gestaltbar und bei Bedarf anpassbar. Insbesondere können mehrere unterschiedliche Informationen in einer optischen Kennung hinterlegt sein. Dies kann beispielsweise durch mehrere nebeneinander angeordnete QR-Codes realisieren. Die Größe der optischen Kennung ist vorzugsweise an eine Fahrzeuggröße und die bestehenden Flächen am Fahrzeug anpassbar. Eine optische Kennung oder ein QR-Code einer optischen Kennung, beispielsweise zum Erkennen eines Fahrzeugs, kann die gleiche sein, wie die optische Kennung zur Ermittlung der relativen Position des Fahrzeugs. Es lassen sich aber auch verschiedene optische Kennungen verwenden, welche speziell für eine Informationsübertragung und für eine Positionsermittlung vorgesehen sind.

Nach einem weiteren Aspekt der Erfindung wird eine Steuereinheit zur Identifikation und/oder zur Positionsbestimmung von mindestens einem Fahrzeug relativ zu einer Ladestation bereitgestellt. Die Steuereinheit empfängt Signale wenigstens eines optischen Sensors, wobei der Sensor ausgebildet ist, um eine optische Kennung an dem Fahrzeug zu erfassen. Die Steuereinheit ist ausgebildet, um anhand der Signale das Fahrzeug zu identifizieren und/oder eine Ortsbestimmung des Fahrzeuges relativ zur Ladestation durchzuführen. Hierdurch kann die Steuereinheit basierend auf den Messdaten des mindestens einen Sensors eine oder mehrere am Fahrzeug angebrachte Kennungen ermitteln und eine Positionsbestimmung des Fahrzeugs durch die Lokalisierung der Kennung durchführen. Es kann somit ein Montageaufwand am Fahrzeug minimiert werden.

Gemäß einer Ausführungsform ist die Steuereinheit ausgebildet, um die Identifikation des Fahrzeuges und/oder die Ortsbestimmung bei einem elektrischen Ladevorgang zu berücksichtigen. Insbesondere kann die Identifikation des Fahrzeuges und/oder die Ortsbestimmung vor einem Initiieren eines Ladevorgangs durchgeführt werden. Hierdurch kann das Fahrzeug optimal relativ zu der Ladestation ausgerichtet werden, wodurch die elektrischen Kontakte der Ladestation mit den elektrischen Gegenkontakten des Fahrzeugs korrespondieren können. Des Weiteren kann durch die Identifikation geprüft werden, ob das Fahrzeug zum Koppeln mit der Ladestation berechtigt ist.

Nach einer weiteren Ausführungsform ist die Steuereinheit ausgebildet, um mittels einer Triangulation aus Bilddaten eine Position des Fahrzeuges zu ermitteln. Die Steuereinheit kann insbesondere einen Algorithmus zum Ermitteln einer Position ausführen, welcher auf dem Messprinzip der Triangulation basiert. Hierdurch kann bereits mit einem optischen Sensor eine Positionsermittlung des Fahrzeugs anhand der mindestens einen optischen Kennung durchgeführt werden.

Gemäß einer weiteren Ausführungsform ist die Steuereinheit mit einer Datenbank verbindbar, wobei in der Datenbank eine Zuordnung der optischen Kennung zu Informationen des Fahrzeuges gegeben ist. Des Weiteren ist die Steuereinheit ausgebildet, um mithilfe der Kennung aus der Datenbank wenigstens eine weitere Information über das Fahrzeug zu ermitteln. Die weitere Information kann bei einem elektrischen Ladevorgang des Fahrzeuges durch die Steuereinheit berücksichtigt werden. Derartige weitere Informationen können beispielsweise eine relative Position von Ladekontakten gegenüber der optischen Kennung sein. Des Weiteren können Fahrzeugmaße ebenfalls bei einer Positionierung des Fahrzeugs gegenüber der Ladestation verwendet werden. Hierdurch kann eine Positionierung des Fahrzeugs relativ zu der Ladestation anhand einer Positionierung der optischen Kennung in einem Abtastbereich des Sensors erfolgen.

Gemäß einem weiteren Aspekt der Erfindung wird ein Fahrzeug bereitgestellt. Das Fahrzeug ist ausgebildet, um mit mindestens einer Ladestation elektrisch zum Aufladen des Fahrzeuges gekoppelt zu werden, wobei das Fahrzeug eine mit optischen Sensoren erfassbare Kennung aufweist, wobei die Kennung für ein menschliches Auge unsichtbar ist. Dadurch, dass die mindestens eine optische Kennung unsichtbar für menschliches Auge ist, können nur Strahlen außerhalb des sichtbaren Spektrums durch die optische Kennung reflektiert werden. Hierdurch kann die Kennung beliebig an Fahrzeugen angebracht werden, ohne ein Gesamtbild des Fahrzeuges zu stören.

Nach einer Ausführungsform sind in der optischen Kennung Fahrzeugdaten, eine Identifikationsnummer, eine Ladeberechtigung und/oder eine optimale Parkposition relativ zur Ladestation zum Durchführen eines Ladevorgangs hinterlegt. Es können somit relevante Informationen in der optischen Kennung gespeichert sein, welche durch einen Sensor allein oder unter Zuhilfenahme einer Datenbank ermittelbar sind. Am Fahrzeug muss hierzu lediglich die mindestens eine optische Kennung angebracht werden, welche passiv und somit ohne eine elektrische Anbindung an die Bordelektronik ausgestaltet ist.

Gemäß einer weiteren Ausführungsform ist die optische Kennung in Form eines Aufklebers ausgestaltet. Der Aufkleber kann beispielsweise aus einem Kunststoff bestehen und an einem Fahrzeug anbringbar sein. Des Weiteren können auch Folien oder Karten eingesetzt werden, welche direkt oder mittels Überzug am Fahrzeug stoffschlüssig angeordnet werden. Hierdurch kann technisch einfach eine oder mehrere optische Kennungen an ein Fahrzeug angeordnet werden.

Nach einer weiteren Ausführungsform weist die optische Kennung mindestens einen QR-Code, einen Bar-Code, einen Zahlencode und/oder eine geometrische Form auf. Hierdurch kann die optische Kennung flexibel und technisch einfach hergestellt werden sowie eine Vielzahl an Informationen aufweisen.

Nach einem weiteren Ausführungsbeispiel des Fahrzeugs ist die mindestens eine optische Kennung auf einem Fahrzeugdach, auf mindestens einer Fahrzeugseite, an einer Fahrzeugfront und/oder an einem Fahrzeugheck angebracht. Die mindestens eine optische Kennung kann beispielsweise abhängig von einer Anzahl und Anordnung von optischen Sensoren flexibel auf dem Fahrzeug positioniert werden.

Gemäß einer technisch besonders einfachen Lösung kann die mindestens eine optische Kennung auf Seitenfenstern, Türen, Frontscheiben bzw. Windschutzscheiben oder Heckscheiben von Fahrzeugen angeordnet werden. Da die optischen Kennungen im sichtbaren Wellenlängenbereich durchsichtig sind, kommt es somit zu keiner Beeinträchtigung. Darüber hinaus kann eine Positionierung der optischen Kennung auf Seitenflächen von Fahrzeugen, insbesondere von Bussen, vorteilhaft sein, da hier die möglichen Ablagerungen von Schnee und Schmutz im Vergleich zu anderen Fahrzeugbereichen gering sind.

Für die Identifikation und Position des Fahrzeugs kann somit lediglich die Position und Größe der optischen Kennung oder eines Codes der optischen Kennung im Bild des optischen Sensors oder einer Kamera ausgewertet werden. Zur Erhöhung der Genauigkeit kann die Größe der Markierung bzw. der optischen Kennung angepasst werden, da insbesondere bei Transportern oder Bussen eine ausreichend große Fläche vorhanden ist.

Gemäß einem weiteren Aspekt der Erfindung wird ein Verfahren zur Identifikation eines Fahrzeugs und zum Ermitteln einer relativen Position des Fahrzeugs gegenüber einer Ladestation bereitgestellt. In einem Schritt wird mindestens eine an dem Fahrzeug angebrachte optische Kennung durch mindestens einen optischen Sensor detektiert, wobei basierend auf in der optischen Kennung hinterlegten Information das Fahrzeug verifiziert und/oder wobei anhand einer Position und Größe der mindestens einen durch den mindestens einen optischen Sensor detektierten optischen Kennung die relative Position des Fahrzeugs zur Ladestation berechnet wird.

Es kann somit ein technisch einfach realisierbares Verfahren bereitgestellt werden, welches anhand einer Markierung bzw. einer optischen Kennung eine Position des Fahrzeugs gegenüber einer Ladestation ableiten kann. Hierfür wird in einem Sichtbereich bzw. in einem aufgezeichneten Bild eines Sensors bzw. einer Kamera mindestens eine optische Kennung detektiert. Je nachdem wie groß die optische Kennung im Bild erscheint und wo die optische Kennung im Bild detektiert wird, kann aus diesen Informationen geschlussfolgert werden, ob das Fahrzeug zu weit weg oder zu nahe an der Ladestation positioniert ist und ob das Fahrzeug zu weit an der Ladestation vorbeigefahren ist oder nicht weit genug vorgefahren ist relativ zu der Ladestation.

Die als Folien oder Aufkleber ausgestalteten optischen Kennungen sind vorzugsweise im sichtbaren Wellenlängenbereich transparent ausgeführt, somit stören sie das Erscheinungsbild und die Funktion der Fahrzeuge nicht. Die optischen Kennungen können somit auch auf Windschutzscheiben oder Seitenscheiben von Fahrzeugen angeordnet werden.

Durch zusätzliche Lichtquellen bzw. eine aktive Beleuchtung, welche vorzugsweise im UV- oder IR-Wellenlängenbereich Strahlung emittieren, kann eine Unabhängigkeit des Systems von Umgebungsbedingungen, insbesondere der Sonneneinstrahlung, realisiert werden.

Des Weiteren ist vorteilhaft, wenn die optischen Kennungen oder Codes innerhalb der optischen Kennung redundant ausgestaltet sind, wodurch eine Unabhängigkeit gegenüber Verschmutzung des Fahrzeugs ermöglicht werden kann. Es kann beispielsweise ein Bus jeweils eine optische Kennung an der Fahrzeugfront, in der Mitte bzw. auf dem Dach und/oder auf den Seitenflächen aufweisen. In der optischen Kennung können beispielsweise Informationen zu der Position der optischen Kennung auf dem Fahrzeug hinterlegt sein, wodurch Fehlinterpretationen durch die Steuereinheit der Ladestation vermeidbar sind.

Mit Hilfe eines Algorithmus kann durch Detektieren der optischen Kennungen die Position der optischen Kennung im Abtastbereich des Sensors ermittelt bzw. gemessen werden. Anschließend kann auf der Position der optischen Kennung im Sichtfeld des Sensors auf die Position des Fahrzeugs relativ zur Ladestation geschlossen werden.

Nach einem Ausführungsbeispiel des Verfahrens wird die relative Position des Fahrzeugs gegenüber der Ladestation über Triangulation, insbesondere über Triangulation aus Messdaten, ermittelt. Ein Algorithmus zum Ermitteln einer Position kann technisch vorteilhaft ausgestaltet sein, wenn er auf dem Messprinzip der Triangulation basiert. Hierdurch kann bereits mit einem optischen Sensor eine Positionsermittlung durch das System durchgeführt werden. Die Daten des optischen Sensors können Messdaten, Bilddaten oder Videodaten sein.

Gemäß einem weiteren Ausführungsbeispiel des Verfahrens wird einem Fahrer oder einer Steuereinheit des Fahrzeugs ein Erreichen einer optimalen Parkposition signalisiert. Hierdurch können sowohl manuell gesteuerte als auch autonome oder teilautonome Fahrzeuge zum Durchführen des Ladevorgangs derart angewiesen werden, dass die Gegenkontakte des Fahrzeugs optimal mit den Kontakten der Ladestation verbunden werden können.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellung eines bevorzugten Ausführungsbeispiels.

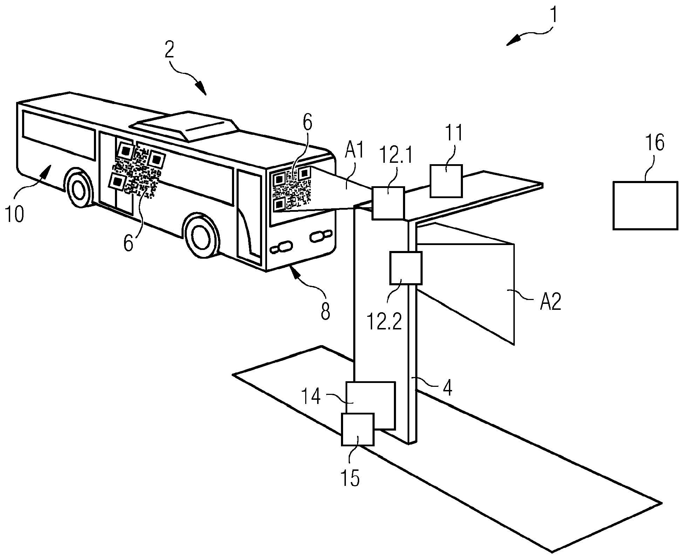

Hierbei zeigt die FIG 1 eine schematische Darstellung eines Systems 1 zur Identifikation und zur Positionsbestimmung von mindestens einem Fahrzeug 2 relativ zu mindestens einer Ladestation 4. Darüber hinaus wird das erfindungsgemäße Verfahren veranschaulicht.

Das Fahrzeug 2 ist gemäß dem Ausführungsbeispiel als ein Bus ausgeführt und weist zwei optische Kennungen 6 auf. Die optischen Kennungen 6 sind auf einer Frontscheibe 8 des Fahrzeugs 2 und auf einer Seitenfläche 10 des Fahrzeugs 2 angebracht. Die optischen Kennungen 6 sind hierbei als Aufkleber ausgestaltet und stoffschlüssig mit dem Fahrzeug 2 verbunden. Die optischen Kennungen 6 weisen einen QR-Code auf, in welchem eine Identifikationsnummer hinterlegt ist.

Die Ladestation 4 weist zwei optische Sensoren 12 auf. Die optischen Sensoren 12 sind Infrarotkameras 12, die auf zwei unterschiedliche Abtastbereiche A1, A2 gerichtet sind. Die Abtastbereiche A1, A2 können bei Bedarf von integrierten Beleuchtungen ausgeleuchtet werden, welche Licht im Infrarotbereich erzeugen. Eine erste Kamera 12.1 dient zum Ermitteln einer optischen Kennung 6 auf einer Fahrzeugfront 8. Hierdurch kann ein heranfahrendes Fahrzeug 2 im Vorfeld von der Ladestation 4 erkannt und erste Vorbereitungen zum Durchführen des Ladevorgangs initiiert werden. Beispielsweise kann eine Identifikationsnummer des Fahrzeugs 2 durch die erste Kamera 12.1 ermittelt werden. Die Identifikationsnummer kann in einer internen Steuereinheit 14 geprüft und das Fahrzeug 2 verifiziert werden. Insbesondere kann eine Ladeberechtigung des Fahrzeugs 2 überprüft werden oder seine Fahrzeugdaten aus einer Datenbank 15 der Steuereinheit 14 abgerufen werden. Gemäß dem Ausführungsbeispiel ist die Datenbank 15 als ein integrierter oder zusätzlicher Datenspeicher ausgeführt.

Alternativ kann die Steuereinheit 14 der Ladestation 4 mit einer externen Servereinheit 16 kommunizieren, um basierend auf der Identifikationsnummer weitere Daten abrufen zu können.

Eine zweite Kamera 12.2 kann eine weitere optische Kennung 6 auf einer Seitenfläche 10 des Fahrzeugs 2 detektieren. Vorzugsweise kann mit Hilfe der zweiten Kamera 12.2 eine Größe der optischen Kennung 6 im Abtastbereich A2 gemessen werden. Hierdurch kann die Positionierung des Fahrzeugs 2 gegenüber der Ladestation 4 überprüft werden.

Die Ladestation 4 weist eine Strahlenquelle 11 in Form eines Infrarotstrahlers auf. Hierdurch kann die optische Kennung 6 ausgeleuchtet und von den Kameras 12 auch bei Dunkelheit zuverlässig detektiert werden.

Die Messung der Position des Fahrzeugs 2 kann präzise durchgeführt werden, insbesondere da die Markierung 6 bzw. optische Kennung 6 beliebig groß ausgestaltet sein kann. Über die Steuereinheit 14 bzw. eine in der Steuereinheit 14 integrierte Datenbank kann durch die Identifikationsnummer des Fahrzeugs 2 eine Relativposition der jeweiligen optischen Kennung 6 zu Kontaktschienen abrufen und diese als Ausrichtungskriterium bei der Positionierung des Fahrzeugs 2 verwenden.

Das Einlesen der optischen Kennungen 6 durch die Kameras 12 kann neben dem Durchführen des Ladevorgangs auch bei vorbeifahrenden Fahrzeugen 2 erfolgen, um beispielsweise Statusinformationen über einen Streckenverlauf der jeweiligen Fahrzeuge 2 zu erhalten. Hierdurch können die Ladestationen 4 als Wegpunkte eingesetzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. System (1) zur Identifikation und/oder zur Positionsbestimmung von mindestens einem Fahrzeug (2) relativ zu mindestens einer Ladestation (4), wobei die Ladestation (4) zum elektrischen Aufladen des Fahrzeuges (2) mit dem Fahrzeug (2) koppelbar ist, wobei das System (1) mindestens einen optischen Sensor (12) aufweist, wobei der Sensor (12) ausgebildet ist, um eine für ein menschliches Auge unsichtbare Kennung (6) zu erfassen.

2. System nach Anspruch 1, wobei in der mindestens einen optischen Kennung (6) Fahrzeugdaten, eine Identifikationsnummer, eine Ladeberechtigung und/oder eine optimale Parkposition relativ zur Ladestation (4) zum Durchführen eines Ladevorgangs hinterlegt sind.

3. System nach Anspruch 1 oder 2, wobei Daten zugeordnet zu Kennungen von Fahrzeugen (2) auf einer Datenbank (15) des Systems (1) oder auf einer externen Servereinheit (16) hinterlegt sind.

4. System nach einem der Ansprüche 1 bis 3, wobei eine Steuereinheit (14) vorgesehen ist, wobei die Steuereinheit (14) ausgebildet ist, um nach der Identifikation der optischen Kennung (6) des mindestens einen Fahrzeugs (2) Daten zum identifizierten Fahrzeug (2) von einer Datenbank (15) oder einer externen Servereinheit (16) abzurufen.

5. System nach einem der Ansprüche 1 bis 4, wobei eine Lichtquelle (11) zum Ausleuchten der mindestens einen optischen Kennung (6) vorgesehen ist.

6. System nach einem der Ansprüche 1 bis 5, wobei der Sensor (12) ausgebildet ist, um die optische Kennung (6) in Form eines QR-Codes, eines Bar-Codes, eines Zahlencodes und/oder in Form einer geometrischen Form zu erkennen.

7. Steuereinheit (14, 16) zur Identifikation und/oder zur Positionsbestimmung von mindestens einem Fahrzeug (2) relativ zu einer Ladestation (4), wobei die Steuereinheit (14, 16) Signale wenigstens eines optischen Sensors (12) empfängt, wobei der Sensor (12) ausgebildet ist, um eine optische Kennung (6) an dem Fahrzeug (2) zu erfassen, wobei die Steuereinheit (14, 16) ausgebildet ist, um anhand der Signale das Fahrzeug (2) zu identifizieren und/oder eine Ortsbestimmung des Fahrzeuges (2) relativ zur Ladestation (4) durchzuführen.

8. Steuereinheit nach Anspruch 7, wobei die Steuereinheit (14, 16) ausgebildet ist, um die Identifikation des Fahrzeuges (2) und/oder die Ortsbestimmung bei einem elektrischen Ladevorgang zu berücksichtigen.

9. Steuereinheit nach Anspruch 7 oder 8, wobei die Steuereinheit (14, 16) ausgebildet ist, um mittels einer Triangulation aus Bilddaten eine Position des Fahrzeuges (2) zu ermitteln.

10. Steuereinheit nach einem der Ansprüche 7 bis 9, wobei die Steuereinheit (14, 16) mit einer Datenbank (15) verbindbar ist, wobei in der Datenbank (15) eine Zuordnung der optischen Kennung (6) zu Informationen des Fahrzeuges (2) gegeben ist, und wobei die Steuereinheit (14, 16) ausgebildet ist, um mithilfe der Kennung (6) aus der Datenbank (15) wenigstens eine weitere Information über das Fahrzeug (2) zu ermitteln, und wobei die Steuereinheit (14, 16) ausgebildet ist, um die weitere Information bei einem elektrischen Ladevorgang des Fahrzeuges (2) zu berücksichtigen.

11. Fahrzeug (2), das ausgebildet ist, um mit mindestens einer Ladestation (4) elektrisch zum Aufladen des Fahrzeuges (2) gekoppelt zu werden, wobei das Fahrzeug (2) eine mit optischen Sensoren (12) erfassbare Kennung (6) aufweist, wobei die Kennung (6) für ein menschliches Auge unsichtbar ist.

12. Fahrzeug nach Anspruch 11, wobei in der optischen Kennung (6) Fahrzeugdaten, eine Identifikationsnummer, eine Ladeberechtigung und/oder eine optimale Parkposition relativ zur Ladestation (4) zum Durchführen eines Ladevorgangs hinterlegt sind.

13. Fahrzeug nach einem der Ansprüche 11 oder 12, wobei die optische Kennung (6) in Form eines Aufklebers ausgestaltet ist.

14. Fahrzeug nach einem der Ansprüche 11 bis 13, wobei die optische Kennung (6) mindestens einen QR-Code, einen Bar-Code, einen Zahlencode und/oder eine geometrische Form aufweist.

15. Fahrzeug nach einem der Ansprüche 11 bis 14, wobei die optische Kennung (6) auf einem Fahrzeugdach, auf mindestens einer Fahrzeugseite (10), an einer Fahrzeugfront (8) und/oder an einem Fahrzeugheck angebracht ist.

16. Verfahren zur Identifikation eines Fahrzeugs (2) und zum Ermitteln einer relativen Position des Fahrzeugs (2) gegenüber einer Ladestation (4), wobei mindestens eine an dem Fahrzeug (2) angebrachte optische Kennung (6) durch mindestens einen optischen Sensor (12) detektiert wird, wobei basierend auf in der optischen Kennung (6) hinterlegten Information das Fahrzeug (2) verifiziert wird und/oder wobei anhand einer Position und Größe der mindestens einen durch den mindestens einen optischen Sensor (12) detektierten optischen Kennung (6) die relative Position des Fahrzeugs (2) zur Ladestation berechnet wird.

17. Verfahren nach Anspruch 16, wobei die relative Position des Fahrzeugs (2) gegenüber der Ladestation (4) über Triangulation, insbesondere über Triangulation aus Messdaten ermittelt wird.

18. Verfahren nach Anspruch 16 oder 17, wobei einem Fahrer oder einer Steuereinheit des Fahrzeugs (2) ein Erreichen einer optimalen Parkposition signalisiert wird.
